# EUROPÄISCHE PATENTSCHRIFT

(11) **EP 0 676 825 B1**
(45) Veröffentlichungstag und Bekanntmachung des Hinweises auf die Patenterteilung: **11.10.2000**
(21) Anmeldenummer: 95104320.7
(22) Anmeldetag: 23.03.1995
(51) Int. Cl.: H01Q 19/10, H01Q 3/20, G01S 13/92

(54) **Radarantenne mit zumindest einem Primärstrahler und einem parabolförmigen Reflektor für ein Verkehrs-Radargerät zur Verkehrserfassung**
Radar antenna with at least one primary radiator and a parabolic reflector for a traffic radar system in traffic-metering
Antenne radar comportant au moins un source primaire et un reflecteur parabolique pour usage dans un radar pour trafic pour la mesure de trafic

(30) Priorität: 08.04.1994 DE 4412205
(43) Veröffentlichungstag der Anmeldung: 11.10.1995
(73) Patentinhaber: SIEMENS AKTIENGESELLSCHAFT, 80333 München (DE)
(72) Erfinder: Schindler, Gerhard, D-81369 München (DE); Härtinger, Erwin, D-81249 München (DE); von Pieverling, Klaus, Dr., D-82515 Wolfratshausen (DE)

(56) Entgegenhaltungen:
- DE-A- 3 920 154
- US-A- 3 797 020
- PATENT ABSTRACTS OF JAPAN vol. 2, no. 64 (E-78) [2026] , 17.Mai 1978 & JP-A-53 029049 (NIPPON DENSHIN DENWA KOSHA), 17.März 1978,

## Beschreibung

Die Erfindung bezieht sich auf eine Radarantenne mit zumindest einem Primärstrahler und einem parabolförmigen Reflektor für ein Verkehrs-Radargerat zur Verkehrserfassung, wobei mit einem relativ flachen Radarstrahl die Fahrzeug-Geschwindigkeit gemessen und mit einem nahezu senkrecht nach unten gerichteten Radarstrahl das Fahrzeug klassifiziert wird.

Zur Steuerung des Verkehrs an Kreuzungen mit mehrspurigen Fahrbahnen werden Informationen über Position, Geschwindigkeit und in zunehmendem Maße auch Art der vorhandenen Fahrzeuge benötigt. Diese Informationen soll ein Verkehrs-Radargerat liefern, bei dem die Position des Fahrzeugs durch die Entfernung und die Zuordnung des Fahrzeugs zu einer Fahrspur definiert ist. Die Entfernung und die Geschwindigkeit des Fahrzeugs läßt sich aus den Echosignalen in bekannter Weise aus Laufzeit und Dopplereffekt ermitteln, über bestimmte Erkennungsmuster ist auch eine Klassifizierung der Fahrzeuge möglich. Für jede Fahrspur ist im allgemeinen eine Antenne vorgesehen, so daß hier von einem "spurbezogenen Verkehrserfassungsradar" gesprochen werden kann.

Das Radargerat mit zwei Strahlern, einem flachen Strahl für die Geschwindigkeitsmessung und einem steilen Strahl für die Fahrzeugklassifizierung, ist in der älteren Patentanmeldung P 43 25 672.4 beschrieben. Der Geschwindigkeitsstrahl ist so flach gerichtet, daß noch keine Abschattungsprobleme entstehen. Der zweite Strahl ist praktisch senkrecht nach unten gerichtet und ermöglicht eine effektive Klassifizierung des Fahrzeugs. Sie besteht im einfachsten Fall aus einer sehr genauen Längenmessung. Ist das Radargerät mit der Fähigkeit zur Entfernungsmessung ausgerüstet (z.B. Radargerät mit Pulsmodulation oder FM-CW-Modulation), so kann neben der Fahrzeuglänge auch die Höhe und das gesamte Profil des Fahrzeugs gemessen werden. Dort ist die Auswertung, jedoch nicht die Ausgestaltung des Radargerats bzw. der Radarantenne beschrieben.

Aufgabe der Erfindung ist es, eine Radarantenne so auszugestalten, daß mit möglichst wenig Mikrowellenaufwand und geringem Platzbedarf erforderliche Radar-Strahlenbündelungen erreicht werden können.

Diese Aufgabe wird mit einer Radarantenne gemäß den Merkmalen des Anspruchs 1 gelost.

Bei der erfindungsgemäßen Radarantenne leuchtet der Primärstrahler den Reflektor aus. Dieser bündelt den Radarstrahl unter einem Winkel, z.B. ca. 15° gegen die Horizontale. Dieser Strahl trifft auf das teildurchlässige Element. Ein Teil der Strahlenenergie durchdringt dieses Element und erzeugt ohne Richtungsänderung den Geschwindigkeitsmeßstrahl. Die restliche Strahlenenergie wird reflektiert und erzeugt den nach unten gerichteten Klassifizierungsstrahl. Durch den Neigungswinkel des teildurchlässigen Elements läßt sich die Strahlrichtung des Klassifizierungsstrahls einstellen. Diese Ausführungsform hat den Vorteil, daß die Realisierung sehr einfach ist. Auch wenn das teildurchlässige Element von einer Schute abgedeckt und die Radarantenne in einen Signalgeber eingebaut ist, ist jedoch im praktischen Einsatz das halbdurchlässige Element witterungsmäßig ungünstig angebracht, weil es leicht verschmutzt werden kann.

In einer vorteilhaften Weiterbildung der Erfindung ist daher oberhalb des teildurchlässigen Elements zusätzlich ein Umlenkreflektor angebracht, derart, daß der Radarstrahl an dem teildurchlässigen Element teilweise nach oben reflektiert und vom Umlenkreflektor zurückgeworfen wird und das teildurchlässige Element durchdringt und den Klassifizierungsstrahl bildet. Dabei ist das teildurchlässige Element gegenüber der vorherigen Ausgestaltung um 90° gedreht.

Der Primärstrahler leuchtet, wie beim vorherigen Ausbildungsbeispiel, den Parabol-Reflektor aus, trifft auf das um 90° versetzte halbdurchlässige Element. Der durchgehende Anteil des Antennenstrahls liefert den Geschwindigkeitsmeßstrahl. Der reflektierte Strahl läuft nunmehr jedoch nach oben und trifft auf einen ebenen Reflektor, der den Strahl nach unten reflektiert. Dieser reflektierte Antennenstrahl erreicht nun wiederum das halbdurchlässige Element und wird aufgeteilt in einen durchgehenden Strahl, welcher den gewünschten Klassifizierungsstrahl bildet, und einen reflektierten Strahl, welcher über den Parabolreflektor in den Primärstrahler zurückläuft.

Zweckmäßigerweise ist das teildurchlässige Element und der Umlenkreflektor zueinander verstellbar angeordnet. In vorteilhafter Weise ist das teildurchlässige Element als planparallele oder keilförmige dielektrische Platte ausgebildet. Der Umlenkreflektor ist als planer metallischer Spiegel ausgebildet.

Es hat sich als besonders vorteilhaft und zweckmäßig erwiesen, die erfindungsgemäße Radarantenne so auszubilden, daß sie in einem normalen Signalgebergehäuse angeordnet werden kann. Dabei wird der parabolähnliche optische Metallreflektor als Radarstrahl-Reflektor verwendet, in dessen Brennpunkt der Primärstrahler, der beispielsweise ein nach Art eines "Bischofsstabes" gespeister Primärerreger sein kann, angeordnet ist.

In einer weiteren Ausgestaltung der Erfindung können mehrere, z.B. zwei Primärstrahler, horizontal und/oder vertikal benachbart angeordnet sein, wobei mehrere Keulenpaare erzeugt werden.

Um zusätzliche Nebenkeulen zu erzeugen, ist der Primärstrahler außerhalb des Antennenreflektorbrennpunkts angeordnet, so daß eine gezielte Defokussierung bewirkt wird.

Im folgenden wird die Erfindung anhand der Zeichnung näher erläutert. Dabei zeigen
Fig. 1 eine Prinzip-Darstellung eines Verkehrsradargerätes mit der erfindungsgemäßen Radarantenne in Seitenansicht und
Fig. 2 in Draufsicht (hier mit einem Doppel-Primärstrahler);
Fig. 3 schematisch die Radarantenne mit teildurchlässigem Element als Zweistrahlantenne und
Fig. 4 mit zusätzlichem Umlenkreflektor;
Fig. 5 schematisch die Radarantenne mit teildurchlässigem Element und Umlenkreflektor mit zwei übereinander angeordneten Primärstrahlern, als Vierfachstrahlantenne und
Fig. 6 mit zwei nebeneinander angeordneten Primärstrahlern;
Fig. 7 ein Ausführungsbeispiel einer Zweistrahl-Radarantenne entsprechend der Fig. 4, in einem normalen Signalgebergehäuse, und
Fig. 8 Elevationsstrahlungsdiagramme der Radarantenne.

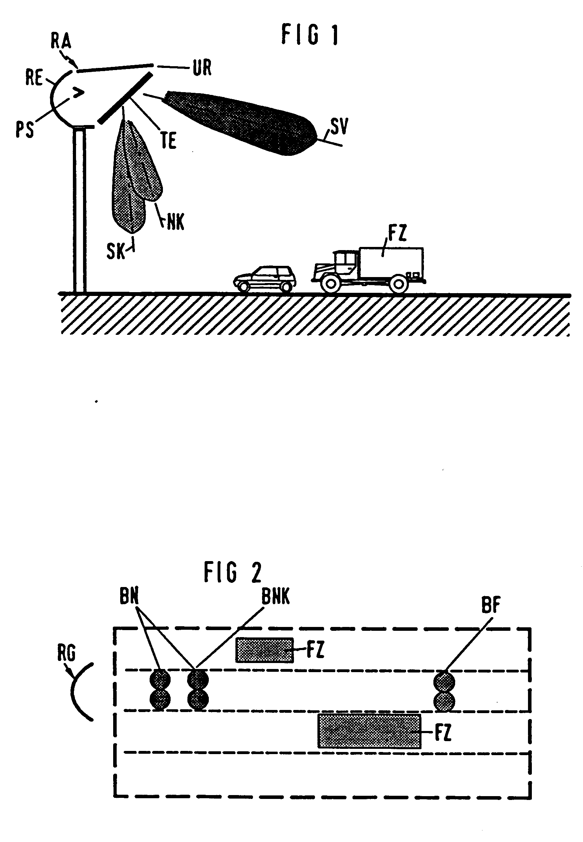

In Fig. 1 ist prinzipiell die Radarantenne RA erhöht dargestellt. Schematisch angedeutet sind der Parabol-Reflektor RE, der Primärstrahler PS, das teildurchlässige Element TE und der metallische Umlenkreflektor UR sowie der Antennenmeßstrahl zur Geschwindigkeitserkennung, z.B. unter einem Winkel von 15° gegen die Horizontale, in Form der Fernkeule SV. Der nahezu senkrecht nach unten gerichtete Antennenstrahl ist hier als Nahkeule SK, beispielsweise unter einem Winkel von 85°, dargestellt. Mit FZ sind die Fahrzeuge bezeichnet. Bei einer gezielten Defokussierung ergeben sich sogenannte Nebenzipfel; hier ist einer dargestellt etwa unter dem Winkel von 77°. Unter der Fig. 1 ist entsprechend dazu in der Fig. 2 diese Anordnung in Draufsicht gezeigt, wobei mehrere Fahrspuren zu sehen sind und hier eine Anordnung mit einem Doppel-Primärstrahler zugrunde gelegt ist.

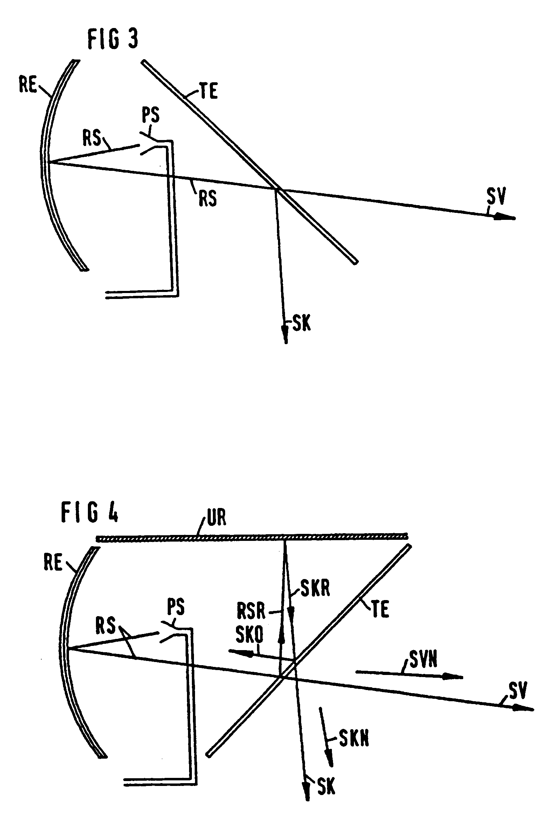

In den Figuren 3 bis 6 ist die Radarantenne lediglich schematisch dargestellt und die Radarstrahlen nur als ein repräsentativer Strahl als Einzellinie angedeutet. In Fig. 3 leuchtet der Primärstrahler PS den Reflektor RE aus. Dieser bündelt den Radarstrahl RS unter einem Winkel von beispielsweise 15° gegen die Horizontale. Dieser Strahl RS trifft nun auf das teildurchlässige Element TE, wo ein Teil der Strahlenenergie durchdringt und ohne Richtungsänderung den Geschwindigkeitsmeßstrahl SV bildet. Die restliche Strahlenenergie wird reflektiert und erzeugt den nach unten gerichteten Klassifizierungsstrahl SK. In Fig. 4 ist die erfindungsgemäße Radarantenne mit dem zusätzlichen Umlenkreflektor UR gezeigt, der als ebener Metallspiegel ausgebildet sein kann. Wie in Fig. 3 leuchtet der Primärstrahler PS den Parabol-Reflektor RE aus, trifft nunmehr aber auf die um 90° versetzte, teildurchlässige dielektrische Platte, teildurchlässiges Element TE, wobei der durchgehende Anteil des Antennenstrahls RS den Geschwindigkeitsmeßstrahl SV liefert. Der reflektierte Strahlenteil RSR läuft nunmehr jedoch nach oben und trifft auf den ebenen Umlenkreflektor UR, der den Strahl nach unten reflektiert, mit SKR bezeichnet. Dieser reflektierte Strahl SKR erreicht nun wiederum die teildurchlässige Platte TE und wird aufgeteilt in einen durchgehenden Strahl, der den gewünschten Klassifizierungsstrahl SK bildet, und einen reflektierten Strahl SKO, der über den Parabol-Reflektor RE in den Primärstrahler PS zurückläuft.

Es mag nun den Anschein haben, daß die Funktionsweise der Radarantenne gemäß der Fig. 4 erheblich komplizierter als bei Fig. 3 ist. Außerdem ist hier unvermeidlich der Energieanteil des Klassifizierungsstrahls SK aufgrund der doppelten Strahl-Aufteilung schwacher, als der des Geschwindigkeitsstrahls SV. Dieser anscheinende Nachteil ist jedoch praktisch von Vorteil, da er dem entfernungsbedingten Pegelunterschied zwischen Geschwindigkeits-Meßentfernung und Klassifizierungs-Entfernung entgegenwirkt.

Der entscheidende Vorteil der Realisierung nach Fig.4 besteht in der günstigen Stellung der teildurchlässigen Platte, teildurchlässiges Element TE, das nunmehr der Antenne einen geschlossenen Umriß verleiht.

Bei dieser erfindungsgemäßen Radarantennenausgestaltung ist eine anspruchsvolle Radarsignalverarbeitung erforderlich, weil die reflektierten Echosignale des flachen Radarstrahls SV und des senkrechten Radarstrahls SK über den einen Primärstrahler empfangen werden.

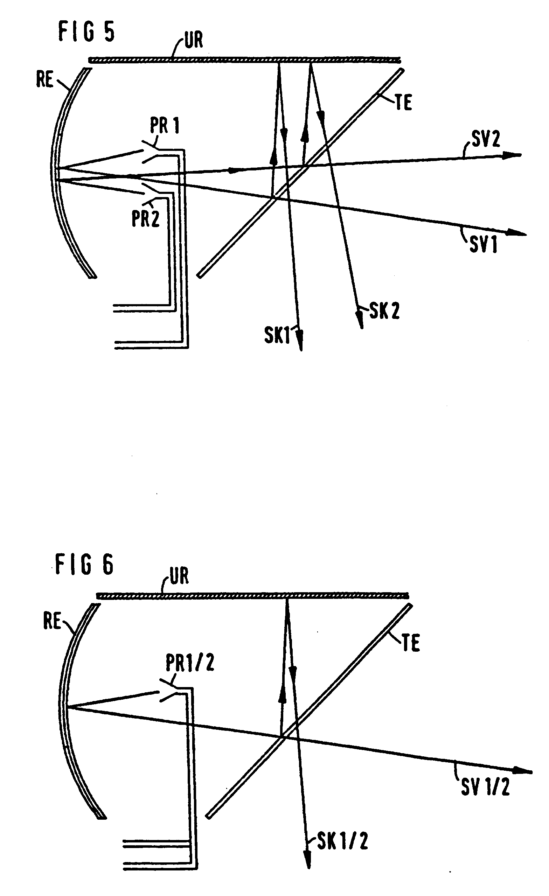

In Weiterbildung der Erfindung ist die Radarantenne mit einem Doppelprimärstrahler ausgerüstet. Dabei sind beispielsweise zwei Varianten möglich, wie sie in den Fig. 5 und 6 gezeigt sind. Gemäß der Fig.5 sind zwei Primärstrahler übereinander so angeordnet, daß mit der teildurchlässigen Platte und dem zusätzlichen Umlenkreflektor eine Vierfachstrahl-Antenne gebildet ist. Neben dem Einsatz von zwei Primärstrahlern hat diese Ausführungsform den Vorteil, daß die Meßwerte der unterschiedlichen Richtungen nunmehr in unterschiedlichen Kanälen zur Verfügung stehen. Dabei ist von Bedeutung, daß jeder Primärstrahler ein vertikales Strahlenpaar erzeugt. Wie aus Fig. 5 ersichtlich ist, liefert der Primärstrahler PR1 das Strahlenpaar SK1, SV1, der Primärstrahler PR2 das Strahlenpaar SK2, SV2. Gegenüber der Fig.4 sind hier die verlorenen Strahlenteile SK0 nicht eingezeichnet.

Neben der Variante nach Fig. 5, welche Strahlenpaare mit unterschiedlichen Elevationswinkeln liefert, also Winkel, die sich in der Senkrechten, d.h. der Zeichenebene, unterscheiden, ist es auch möglich, Strahlenpaare mit unterschiedlichen Azimutwinkeln zu erzeugen. Ersetzt man beispielsweise, wie in Fig. 6 gezeigt, dem Primärstrahler PR der Fig. 4 durch zwei nebeneinander angeordnete, d.h. in der Zeichenebene sich überdeckende, Primärstrahler PR1,2, so entsteht anstelle der Strahlen SK und SV jeweils ein Strahlenpaar SK1/2 bzw. SV1/2 (gleicher Elevationswinkel, unterschiedlicher Azimutwinkel, in der Fig. 4 sich überdeckend). Diese horizontalen Strahlenpaare lassen sich für unterschiedliche Zwecke nutzen. So kann beispielsweise das Strahlenpaar SV1/2 zur Peilung des Fahrzeugs verwendet werden, d.h. es kann ermittelt werden, wieweit der Reflexionsschwerpunkt außerhalb der Fahrbahnmitte liegt.

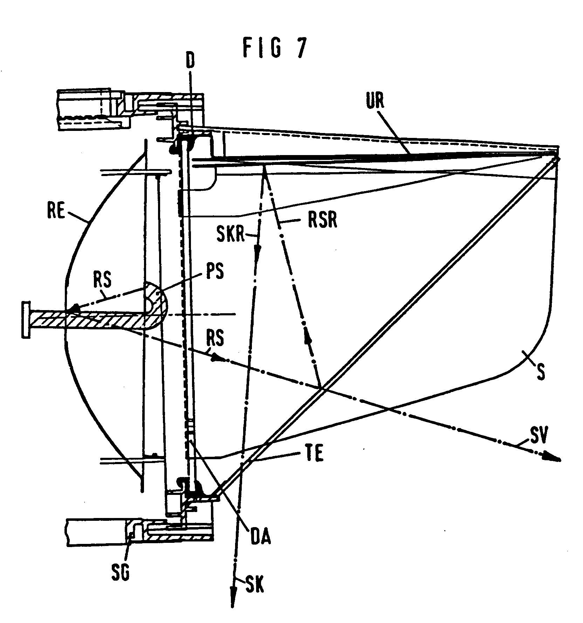

Die Varianten gemäß der Figuren 6 und 7 lassen sich natürlich auch kombinieren, wobei relativ komplexe Antennenanordnungen entstehen können.

Bei einer nach der Fig.4 aufgebauten Antenne liefert die Antenne im wesentlichen die zwei gewünschten Strahlen SV, SK (siehe dazu Fig.1) mit zusätzlichen im allgemeinen unerwünschten Nebenzipfel, deren Amplitude genügend weit unterhalb der Hauptstrahlen liegt. Variiert man z.B. den Abstand des Primärstrahlers PS - Reflektors RE - so, daß die Strahlen nicht mehr optimal fokussiert sind, so treten zwei Effekte auf. Zum einen sinkt der Gewinn der Hauptstrahlen unwesentlich ab, zum anderen steigt der Pegel der Nebenzipfel an. Diese Nebenzipfel können nun als Zusatzstrahlen genutzt werden, um insbesondere für die Aufgabe der Fahrzeugklassifizierung zusätzliche Meßdaten aus anderen Blickwinkeln zu erhalten. Voraussetzung für die Nutzung dieser Zusatzstrahlen ist natürlich wiederum die Möglichkeit einer Trennung der Meßdaten mittels der Radarsignalverarbeitung. In der Fig.4 sind zwei zusätzliche Strahlen SKN und SVN angedeutet, welche sich bei einer gezielten Defokussierung der Antenne ausbilden.

In der Fig. 7 ist die Radarantenne an einem praktischen Ausführungsbeispiel dargestellt. Sie ist in einem normalen Signalgebergehäuse SG angeordnet. Der ohnehin vorhandene parabolähnliche optische Metallreflektor wird als Antennenreflektor RE benutzt, in dessen Brennpunkt der Primärstrahler PS in Form eines sogenannten Bischofsstabes angeordnet ist. Der Reflektor RE und der Primärstrahler PS ist mit einer dielektrischen Abdichtplatte DA abgeschlossen, welche in eine Dichtungsgummi DE gelagert ist. Davor ist das teildurchlässige Element TE ebenfalls in Form einer dielektrischen Platte unter einem bestimmten Winkel angeordnet. Darüber befindet sich entsprechend zugeordnet der Umlenkreflektor UR als planer Metallreflektor. Das Ganze ist von der üblichen Schute S zusätzlich von oben her gegen Umwelteinflüsse etwas geschützt. Im weiteren sind dargestellt der Radarstrahl RS, der aus dem Primärstrahler PS abgestrahlt und am Reflektor RE reflektiert wird und auf die dielektrische Platte TE trifft. Dort tritt ein Teil unreflektiert hindurch und bildet die Fernkeule zur Geschwindigkeitsmessung als flacher Radarstrahl SV. Ein Teil der Radarenergie wird zum Umlenkreflektor UR reflektiert und von dort wiederum reflektiert, um als Nahkeule SK zur Fahrzeugklassifizierung nahezu senkrecht nach unten auszutreten.

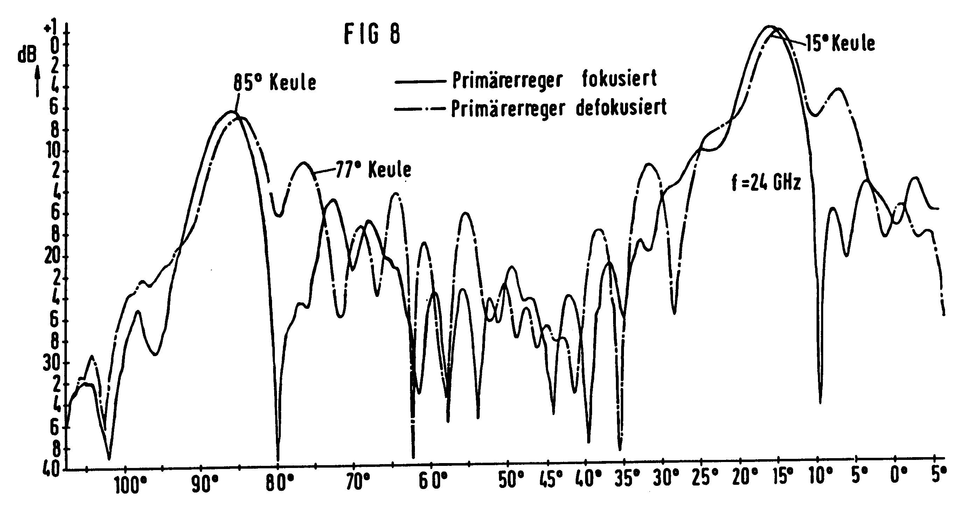

In der Fig. 8 sind die Strahlungseigenschaften der beschriebenen Antenne gezeigt. Abhängig von der axialen Position des Primärerregers, hier im Diagramm an einem Doppelerreger dargestellt, relativ zum Brennpunkt des Parabolreflektors ergeben sich zwei Strahlungsdiagramme, die sich wesentlich in der Ausbildung des Nebenfeldmaximums bei 77° unterscheiden. Beide Diagrammformen sind für die Signalauswertung von Interesse und sind daher angestrebt. Der Pegelunterschied zwischen Fern- und Nahkeule beträgt typisch etwa 6 dB bei Halbwertsbreiten von 5° bzw. 6° (Fernkeule, fokussiert, defokussiert) und 5°/5° (Nahkeule, fokussiert, defokussiert). Die Höhe des Komanebenzipfels liegt etwa 5 dB unter dem des absoluten Maximums der Nahkeule.

## Patentansprüche

1. Radarantenne mit zumindest einem Primärstrahler (PS) und einem parabolförmigen Reflektor (RE) für ein Verkehrs-Radargerät zur Verkehrserfassung, wobei mit einem relativ flachen Radarstrahl 1 (SV) die Fahrzeug-Geschwindigkeit gemessen und mit einem nahezu senkrecht nach unten gerichteten Radarstrahl 2 (SK) das Fahrzeug (FZ) klassifiziert wird,
**dadurch gekennzeichnet**, daß im Aperturbereich ein teildurchlässiges Element (TE) derart angeordnet ist, daß der Radarstrahl (RS) in zumindest zwei Radarstrahlen aufgeteilt wird, wobei der durchtretende Radarstrahl 1 eine Fernkeule (SV) und der reflektierte Radarstrahl 2 eine Nahkeule (SK) bilden.

2. Radarantenne nach Anspruch 1,
**dadurch gekennzeichnet**, daß zusätzlich ein Umlenkreflektor (UR) oberhalb des teildurchlässigen Elements (TE) angeordnet ist, wobei das teildurchlässige Element (TE) und der Umlenkreflektor (UR) winkelmäßig zueinander derart angeordnet sind, daß der Radarstrahl (RS) an dem teildurchlässigen Element (TE) teilweise nach oben reflektiert und vom Umlenkreflektor (UR) zurückgeworfen wird und das teildurchlässige Element (TE) durchdringt und die Nahkeule (SK) bildet.

3. Radarantenne nach Anspruch 2,
**dadurch gekennzeichnet**, daß das teildurchlässige Element (TE) und der Umlenkreflektor (UR) zueinander verstellbar sind.

4. Radarantenne nach einem der vorhergehenden Ansprüche,
**dadurch gekennzeichnet**, daß das teildurchlässige Element (TE) als planparallele oder keilförmige dielektrische Platte ausgebildet ist.

5. Radarantenne nach Anspruch 2 oder 3,
**dadurch gekennzeichnet**, daß der Umlenkreflektor als planer metallischer Spiegel ausgebildet ist.

6. Radarantenne nach einem der vorhergehenden Ansprüche,
**dadurch gekennzeichnet**, daß die Radarantenne in einem normalen Signalgeber-Gehäuse (SG) angeordnet ist, wobei der Reflektor (RE) vom Parabolspiegel gebildet und der Primärstrahler (PS) im Brennpunktbereich angeordnet ist.

7. Radarantenne nach einem der vorhergehenden Ansprüche,
**dadurch gekennzeichnet**, daß mehrere Primärstrahler, beispielsweise zwei, horizontal und/oder vertikal benachbart angeordnet sind, wobei mehrere Keulenpaare erzeugt werden.

8. Radarantenne nach einem der vorhergehenden Ansprüche,
**dadurch gekennzeichnet**, daß zur Bildung zusätzlicher Nebenkeulen der Primärstrahler (PS) außerhalb des Brennpunkts des Radarreflektors (RE) angeordnet ist, um eine gezielte Defokussierung zu bewirken.

## Claims

1. Radar antenna having at least one primary radiating element (PS) and a parabolic reflector (RE) for a traffic radar for traffic detection, with the vehicle speed being measured with a relatively flat radar beam 1 (SV), and the vehicle (FZ) being classified with a radar beam 2 (SK) which points virtually vertically downwards,
characterized in that a partially permeable element (TE) is arranged in the aperture area in such a way that the radar beam (RS) is split into at least two radar beams, with the radar beam 1 which passes through forming a far lobe (SV) and the reflected radar beam 2 forming a near lobe (SK).

2. Radar antenna according to Claim 1,
characterized in that a deflection reflector (UR) is additionally arranged above the partially permeable element (TE), with the partially permeable element (TE) and the deflection reflector (UR) being arranged at an angle to one another in such a way that the radar beam (RS) is partially reflected upwards on the partially permeable element (TE), and is thrown back by the deflection reflector (UR), passes through the partially permeable element (TE) and forms the near lobe (SK).

3. Radar antenna according to Claim 2,
characterized in that the partially permeable element (TE) and the deflection reflector (UR) are adjustable with respect to one another.

4. Radar antenna according to one of the preceding claims,
characterized in that the partially permeable element (TE) is in the form of a plane-parallel or wedge-shaped dielectric plate.

5. Radar antenna according to Claim 2 or 3,
characterized in that the deflection reflector is in the form of a plane metallic mirror.

6. Radar antenna according to one of the preceding claims,
characterized in that the radar antenna is arranged in a normal signal transmitter housing (SG), with the reflector (RE) being formed by the parabolic mirror, and the primary radiating element (PS) being arranged in the region of the focus.

7. Radar antenna according to one of the preceding claims,
characterized in that a plurality of primary radiating elements, for example two, are arranged horizontally and/or vertically adjacent to one another, with a plurality of lobe pairs being produced.

8. Radar antenna according to one of the preceding claims,
characterized in that, in order to form additional side lobes, the primary radiating element (PS) is arranged away from the focus of the radar reflector (RE), in order to produce deliberate defocusing.

## Revendications

1. Antenne radar comportant au moins un émetteur (PS) primaire et un réflecteur (RE) parabolique pour un appareil radar de trafic pour la détection du trafic, la vitesse des véhicules automobiles étant mesurée par un rayon 1 (SV) radar relativement plat et le véhicule (FZ) automobile étant classé par un rayon 2 (SK) radar dirigé pratiquement verticalement vers le bas,
caractérisée en ce qu'il est monté dans la zone d'ouverture un élément (TE) semi-transparent de telle manière que le faisceau (RS) radar est subdivisé en au moins deux faisceaux radar, le faisceau (1) radar traversant formant un lobe (SV) lointain et le faisceau radar réfléchi formant un lobe (SK) proche.

2. Antenne radar suivant la revendication 1,
caractérisée en ce qu'il est monté en plus un réflecteur (UR) de déviation au-dessus de l'élément (TE) semi-transparent, l'élément (TE) semi-transparent et le réflecteur (UR) de déviation étant disposés l'un par rapport à l'autre suivant un angle tel que le faisceau (RS) radar est partiellement réfléchi vers le haut sur l'élément (TE) semi-transparent et renvoyé par le réflecteur (UR) de déviation et traverse l'élément (TE) semi-transparent et forme le lobe (SK) proche.

3. Antenne radar suivant la revendication 2,
caractérisée en ce que l'élément (TE) semi-transparent et le réflecteur (UR) de déviation peuvent être réglés l'un par rapport à l'autre.

4. Antenne radar suivant l'une des revendications précédentes,
caractérisé en ce que l'élément (TE) semi-transparent est réalisé en plaque diélectrique parallèle à un plan ou cunéiforme.

5. Antenne radar suivant la revendication 2 ou 3, caractérisée en ce que le réflecteur de déviation est réalisé en miroir métallique plan.

6. Antenne radar suivant l'une des revendications précédentes, caractérisée en ce que l'antenne radar est montée dans un boîtier (SG) normal de générateur de signaux, le réflecteur (RE) étant formé par le miroir parabolique et l'émetteur (PS) primaire étant monté dans la zone du foyer.

7. Antenne radar suivant l'une des revendications précédentes, caractérisée en ce qu'il est monté à proximité horizontalement et/ou verticalement plusieurs émetteurs primaires, par exemple deux, plusieurs couples de lobe étant produits.

8. Antenne radar suivant l'une des revendications précédentes, caractérisée en ce que, en vue de former des lobes secondaires supplémentaires, l'émetteur (PS) primaire est monté à l'extérieur du foyer du réflecteur (RE) radar pour provoquer une défocalisation ciblée.
